# EUROPÄISCHE PATENTSCHRIFT

(11) **EP 2 719 129 B1**
(45) Veröffentlichungstag und Bekanntmachung des Hinweises auf die Patenterteilung: **08.04.2015**
(21) Anmeldenummer: 12724138.8
(22) Anmeldetag: 25.05.2012
(51) Int. Cl.: H04L 12/46, H04L 12/28, H04L 12/24, H04L 29/06, H04L 29/08

(54) **HAUSKOMMUNIKATIONSNETZWERK**
HOME COMMUNICATION NETWORK
RESEAU DE COMMUNICATION DE DOMOTIQUE

(30) Priorität: 06.06.2011 DE 102011077013
(43) Veröffentlichungstag der Anmeldung: 16.04.2014
(73) Patentinhaber: S. Siedle & Söhne Telefon- und Telegrafenwerke OHG, 78120 Furtwangen (DE)
(72) Erfinder: WEBER, Christoph, 78120 Furtwangen (DE)
(74) Vertreter: Isarpatent
(86) Internationale Anmeldenummer: PCT/EP2012/059918
(87) Internationale Veröffentlichungsnummer: WO 2012/168104

(56) Entgegenhaltungen:
- WO-A2-03/049445
- US-A1- 2002 009 078
- US-A1- 2004 042 454

## Beschreibung

### GEBIET DER ERFINDUNG

Die Erfindung betrifft ein Hauskommunikationsnetzwerk mit mehreren Netzwerksegmenten und insbesondere ein IP-basiertes Hauskommunikationsnetzwerk.

### TECHNISCHER HINTERGRUND

Herkömmliche Hausautomations- bzw. Hauskommunikationssysteme weisen eine enge Produkt- oder Herstellerbindung auf. Dabei lassen sich in vielen Fällen nur Komponenten eines bestimmten Herstellers einsetzen. Daher sind Geräte bzw. Teilnehmer häufig nicht miteinander kompatibel. Demzufolge sind herkömmliche Hausautomations- bzw. Hauskommunikationssysteme unflexibel und nur schwer an technische Rahmenbedingungen bzw. Kundenwünsche adaptierbar. US 2002/009078 A1 zeigt den Gegenstand des Präambels der unabhängigen Ansprüche.

### ZUSAMMENFASSUNG DER ERFINDUNG

Es ist daher eine Aufgabe der vorliegenden Erfindung, ein Hauskommunikationsnetzwerk und ein Verfahren zur Kommunikation von Teilnehmern eines Hauskommunikationsnetzwerkes zu schaffen, das die obengenannten Nachteile vermeidet.

Diese Aufgabe wird erfindungsgemäß durch ein Hauskommunikationsnetzwerk mit den in Patentanspruch 1 angegebenen Merkmalen gelöst.

Die Erfindung schafft ein Hauskommunikationsnetzwerk mit mehreren Netzwerksegmenten, die über Switches miteinander gekoppelt sind, wobei Teilnehmer des Hauskommunikationsnetz-werkes jeweils über eine Anschlussleitung an ein Port eines Switches angeschlossen sind und durch die Switches zur Kommunikation paarweise miteinander verbunden werden.

Dabei ist an mindestens einem Switch des Hauskommunikationsnetzwerks ein Access-Server zur skriptgesteuerten Datenverarbeitung von Daten angeschlossen.

Das Hauskommunikationsnetzwerk ist ein IP-basiertes Hauskommunikations- oder Hausautomationssystem, das in einfacher Weise um Systemfunktionalitäten erweiterbar ist.

Das erfindungsgemäße Hauskommunikationssystem ist voll skalierbar und kann eine Vielzahl von Teilnehmern bzw. Endgeräten umfassen.

In einer möglichen Ausführungsform des erfindungsgemäßen Hauskommunikationsnetzwerks kommunizieren die Teilnehmer unter Steuerung des Access-Servers durch Austausch von Datenpaketen miteinander.

Bei einer möglichen Ausführungsform des erfindungsgemäßen Hauskommunikationsnetzwerks weisen die Switches Power over Ethernet-(PoE)Switches auf.

Bei einer möglichen Ausführungsform des erfindungsgemäßen Hauskommunikationsnetzwerks sind die Switches Multicast-fähig.

Bei einer möglichen Ausführungsform des erfindungsgemäßen Hauskommunikationsnetzwerks sind die Switches jeweils über ein Command-Line Interface konfigurierbar.

Bei einer möglichen Ausführungsform des erfindungsgemäßen Hauskommunikationsnetzwerks ist die Konfiguration der Teil-nehmer und der Switches des Hauskommunikationsnetzwerks in dem Access-Server des Hauskommunikationsnetzwerks gespeichert.

Bei einer möglichen Ausführungsform des erfindungsgemäßen Hauskommunikationsnetzwerks weisen die darin enthaltenen Teilnehmer adressierbare Hausendgeräte auf, insbesondere Haustelefonendgeräte, Türsteuereinrichtungen, Videokameras, Videogeräte, Türsprecheinrichtungen, Tastenfelder, Rollladensteuereinrichtungen, Haus-Schalteinrichtungen, Schalter, Hausbeleuchtungseinrichtungen, Bewegungsmeldeeinrichtungen, Schlüsselleseeinrichtungen, Kartenleseeinrichtungen, Fingerabdruckerkennungseinrichtungen und Hauscomputereinrichtungen.

Bei einer möglichen Ausführungsform des erfindungsgemäßen Hauskommunikationsnetzwerks sind die Teilnehmer jeweils über eine MAC-Adresse oder über eine IP-Adresse adressierbar.

Bei einer möglichen Ausführungsform des erfindungsgemäßen Hauskommunikationsnetzwerks ist ein entfernter Teilnehmer direkt über einen Switch oder über das Internet mit dem Hauskommunikationsnetzwerk verbunden.

Bei einer alternativen Ausführungsform des erfindungsgemäßen Hauskommunikationsnetzwerks ist ein entfernter Teilnehmer über ein Gateway, welches an ein Port eines Switches angeschlossen ist, über das Internet mit dem Hauskommunikationsnetzwerk verbunden.

Bei einer möglichen Ausführungsform des erfindungsgemäßen Hauskommunikationsnetzwerks weist der Access-Server eine oder mehrere Schnittstellen zum Empfang von Datenpaketen auf, welche von einem Teilnehmer über ein Datennetzwerk gemäß einem ersten Datenübertragungsprotokoll zu dem Access-Server übertragen werden.

Bei einer möglichen Ausführungsform des erfindungsgemäßen Hauskommunikationsnetzwerks besitzt der Access-Server für jede Schnittstelle einen zugehörigen Protokolltreiber, welcher die in dem empfangenen Datenpaket enthaltenen Daten in ein internes Datenformat des Access-Servers umwandelt.

Bei einer möglichen Ausführungsform des erfindungsgemäßen Hauskommunikationsnetzwerks weist der Access-Server eine Scripting-Engine auf, die ein gespeichertes Anwendungsprogrammskript lädt, welches die in dem internen Datenformat des Access-Servers vorliegenden empfangenen Daten gemäß den in dem geladenen Anwendungsprogrammskript enthaltenen Anwendungsprogrammanweisungen verarbeitet.

Bei einer möglichen Ausführungsform des erfindungsgemäßen Hauskommunikationsnetzwerks erfolgt die Datenverarbeitung der in dem internen Datenformat des Access-Servers vorliegenden empfangenen Daten gemäß den in dem geladenen Anwendungsprogrammskript enthaltenen Anwendungsprogrammanweisungen anhand von Statuspunkten, die jeweils einen Zustand einer Gerätefunktion eines Teilnehmers angeben.

Bei einer möglichen Ausführungsform des erfindungsgemäßen Hauskommunikationsnetzwerks werden die durch den Access-Server verarbeiteten Daten durch einen Protokolltreiber des Access-Servers in Datenpakete verpackt und gemäß einem zweiten Datenübertragungsprotokoll über eine Schnittstelle des Access-Servers zu einem zweiten Teilnehmer übertragen.

Bei einer möglichen Ausführungsform des erfindungsgemäßen Hauskommunikationsnetzwerks verfügt der Access-Server über Schnittstellen, insbesondere eine Feldbus-Schnittstelle, eine SIP-(Session Initiation Protocol)Schnittstelle, eine Webservice-Schnittstelle, eine Telefonanlagen-Schnittstelle und eine SNMP-Schnittstelle.

Bei der Feldbus-Schnittstelle kann es sich bei einer möglichen Ausführungsform um eine KNX-Feldbus-Schnittstelle handeln.

Die Erfindung schafft ferner ein Verfahren zur Kommunikation von Teilnehmern eines Hauskommunikationsnetzwerks mit den in Patentanspruch 12 angegebenen Merkmalen.

Die Erfindung schafft ein Verfahren zur Kommunikation von Teilnehmern eines Hauskommunikationsnetzwerks mit mehreren Netzwerksegmenten, die über Switches miteinander gekoppelt sind, wobei Teilnehmer des Hauskommunikationsnetzwerks jeweils über eine Anschlussleitung an ein Port eines Switches angeschlossen sind und durch die Switches zur Kommunikation paarweise miteinander verbunden bzw. geschaltet werden.

Dabei ist an mindestens einem Switch des Hauskommunikationsnetzwerks ein Access-Server angeschlossen, der Daten skriptgesteuert verarbeitet.

Bei einer möglichen Ausführungsform des erfindungsgemäßen Hauskommunikationsnetzwerks erfolgt die Signalisierung zwischen den Teilnehmern unter Steuerung des Access-Servers.

Bei einer möglichen Ausführungsform des erfindungsgemäßen Verfahrens erfolgt die Signalisierung zwischen den Teilnehmern über den Access-Server gemäß einem SIP-(Session Initiation Protocol).

### INHALTSANGABE DER ZEICHNUNGEN

Im Weiteren werden mögliche Ausführungsformen des erfindungsgemäßen Hauskommunikationsnetzwerks und des erfindungsgemäßen Verfahrens zur Kommunikation von Teilnehmern eines Hauskommunikationsnetzwerks unter Bezugnahem auf die beigefügten Figuren näher erläutert.
- Fig. 1: zeigt ein Diagramm zur Darstellung eines Ausführungsbeispiels des erfindungsgemäßen Hauskommunikationsnetzwerks;
- Fig. 2A, 2B, 2C: zeigen verschiedene Varianten zum Anschluss von Teilnehmern an Switches des erfindungsgemäßen Hauskommunikationsnetzwerks, wie es in Fig. 1 dargestellt ist;
- Fig. 3 - 8: zeigen verschiedene Ausführungsbeispiele des erfindungsgemäßen Hauskommunikationsnetzwerks;
- Fig. 9: zeigt schematisch ein erfindungsgemäßes Hauskommunikationsnetzwerk auf Protokollebene.

### BESCHREIBUNG DER AUSFÜHRUNGSBEISPIELE

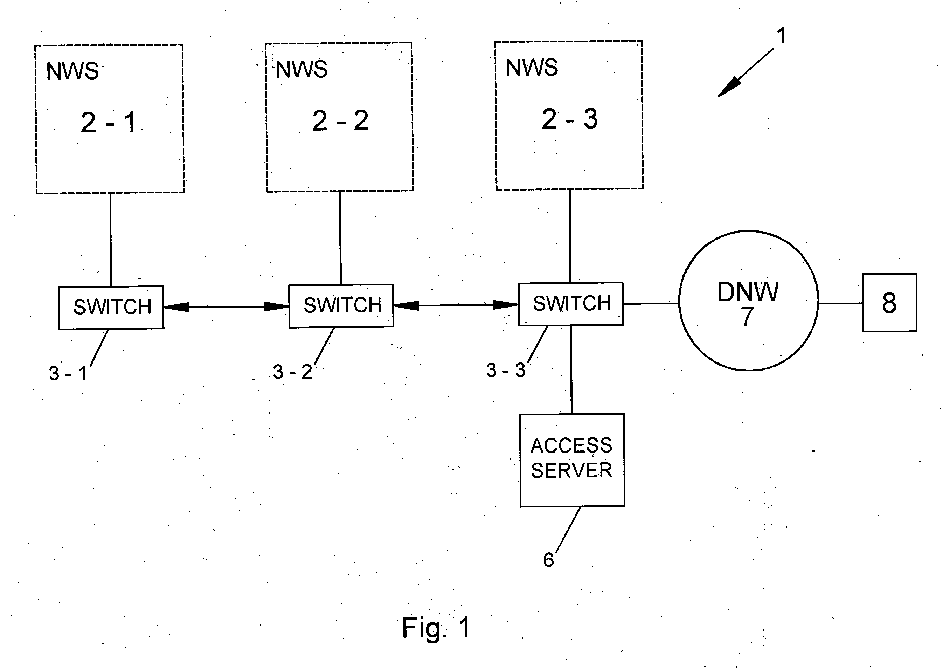

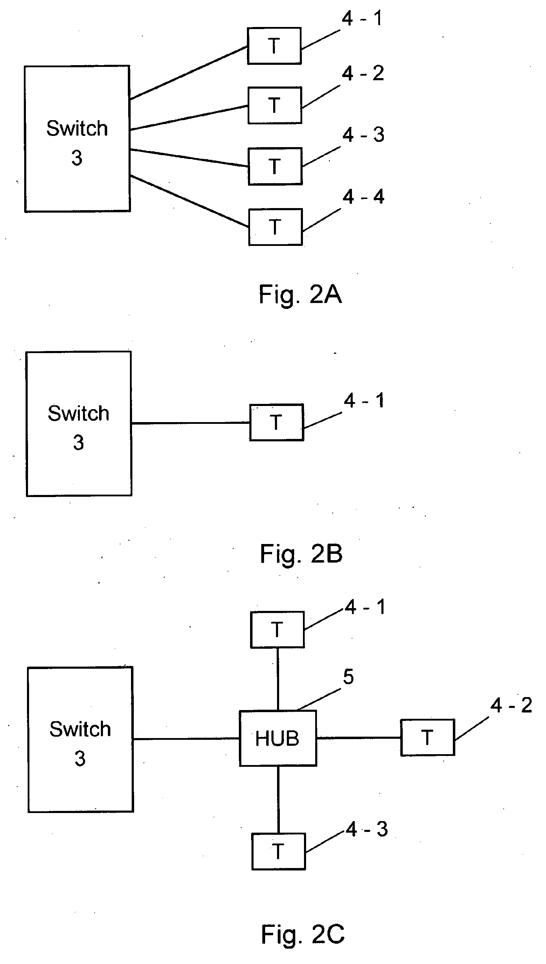

Wie man aus Fig. 1 erkennen kann, weist das erfindungsgemäße Hauskommunikationsnetzwerk 1 bei dem dargestellten Ausführungsbeispiel mehrere Netzwerksegmente 2-1, 2-2, 2-3 auf, die über Switches 3-1, 3-2, 3-3 miteinander gekoppelt bzw. verbunden sind. Dabei sind Teilnehmer 4-i des Hauskommunikationsnetzwerks, wie sie in den Fig. 2 - 2C dargestellt sind, an ein Switch 3 angeschlossen.

In dem in Fig. 2A dargestellten Beispiel sind mehrere Teilnehmer 4-i an verschiedene Ports eines Switches 3 angeschlossen. Es ist auch möglich, dass nur ein Teilnehmer 4-1 an ein Switch angeschlossen ist, wie in Fig. 2B dargestellt. Weiterhin können Switches 4-i über ein HUB 5 mit einem Switch 3 verbunden sein. Der HUB 5 kann einen Multi-Signalrepeater bilden, der Signale auf einem Port empfängt und auf allen anderen Ports wieder ausgibt.

Der Einsatz von Switches 3-i, wie sie in der Fig. 1 dargestellt sind, ermöglicht die Segmentierung des Hauskommunikationsnetzwerks 1 in Netzwerksegmente 2-i. An dem in Fig. 1 dargestellten Switch 3-3 ist ein Access-Server 6 angeschlossen. Die einzelnen Teilnehmer bzw. Endgeräte haben ihre Anschlussleitung zu dem Port für sich allein und der Switch verbindet Teilnehmer für die Dauer der Kommunikation paarweise miteinander.

In einer Ausführungsvariante werden der eingehende Rahmen bzw. die Datenpakete von einem Switch 3 nur auf ihre Quell- und Zieladresse hin untersucht. Beim Herstellen der Verbindung zur Zieladresse, beispielsweise zum nächsten Knoten oder Switch 3 auf dem Weg zur Zieladresse wird der Rahmen bzw. das Datenpaket ohne weitere Untersuchung durch das Switch 3 weitergeleitet. Ist das Ziel portbesetzt, so dass eine sofortige Weiterleitung des Datenpaketes nicht möglich ist, erfolgt eine Zwischenspeicherung bzw. Pufferung der Daten in dem jeweiligen Switch 3, bis die Verbindung wieder frei ist.

Alternativ kann das Switch 3 automatisch alle ankommenden Rahmen bzw. Datenpakete speichern und gegebenenfalls eine Fehlerprüfung durchführen. Der Vorteil bei dieser Ausführungsform besteht darin, dass defekte Rahmen bzw. Datenpakete durch das Switch 3 verworfen werden können, damit das Hauskommunikationsnetzwerk 1 nicht unnötig belastet wird.

Die Switches 3 bilden Brücken mit mehreren Ports, an denen jeweils nur noch ein Teilnehmer angeschlossen ist.

In dem in Fig. 1 dargestellten Ausführungsbeispiel ist über ein Datennetzwerk 7 ein entfernter Teilnehmer 8 an ein Port des Switches 3-3 angeschlossen. Bei dem Datennetzwerk 7 kann es sich beispielsweise um das Internet handeln. Es ist möglich, dass ein Teilnehmer über ein Gateway an das Hauskommunikationsnetzwerk 1 angeschlossen ist. Die verschiedenen Teilnehmer 4-i kommunizieren unter Steuerung des Access-Servers 6 zum Austausch von Datenpaketen oder Rahmen miteinander. Der Access-Server 6 kann eine skriptgesteuerte Datenverarbeitung von empfangenen Daten durchführen. Dafür verfügt der Access-Server 6, wie in Fig. 1 dargestellt ist, über eine Schnittstelle bzw. Datenschnittstelle zum Empfang von Datenpaketen, welche von einem Teilnehmer 4 über das Netzwerk gemäß einem ersten Datenübertragungsprotokoll übertragen werden. Beim Access-Server 6 kann für jede Datenschnittstelle des Access-Servers 6 ein zugehöriger Protokolltreiber vorgesehen sein, der die in den empfangenen Datenpaketen enthaltenen Daten in ein internes Datenformat des Access-Servers 6 umwandelt. Der Access-Server 6 verfügt vorzugsweise über eine Skripting-Engine, die ein gespeichertes Anwendungsprogrammskript lädt, welche die in dem internen Datenformat vorliegenden empfangenen Daten gemäß den in dem geladenen Anwendungsprogrammskript enthaltenen Anwendungsprogrammanweisungen verarbeitet. Die Verarbeitung der Daten durch das geladene Anwendungsprogrammskript erfolgt vorzugsweise anhand von sogenannten Statuspunkten SP, die jeweils einen Zustand einer Gerätefunktion eines Teilnehmers 4-i angeben. Der Access-Server 6 verfügt ferner vorzugsweise über einen Server-Kernel. Dieser Server-Kernel weist primäre Basisdienste auf, insbesondere einen Nachrichtenaustauschdienst zum internen Austauschen von Nachrichten innerhalb des Access-Servers 6, einen Datenbankdienst zum Bereitstellen von Konfigurationsdaten sowie einen Datastore-Dienst zum Bereitstellen von Laufzeitdaten aller Dienste des Access-Servers 6. Neben den primären Diensten bzw. Basisdiensten stellt der Access-Server 6 vorzugsweise als sekundäre Dienste Netzwerkdienste für das Hauskommunikationsnetzwerk 1 gemäß der Erfindung bereit. Diese Netzwerkdienste umfassen bei einer möglichen Ausführungsform einen DHCP-(Dynamic Host Configuration Protocol)Dienst zur Vergabe von IP-Adressen für die Teilnehmer 4, 8, einen DNS-(Domain Name System)Dienst zur Adressauflösung, einen NTP-Dienst zur Zeitsynchronisätion sowie einen TFTP-(Trivial File Transfer Protocol)Dienst zum Datentransfer zwischen Teilnehmern 4, 8 und dem Access-Server 6.

Der Access-Server 6 des'erfindungsgemäßen Hauskommunikationsnetzwerks 1 kann verschiedene Schnittstellen neben den Datenschnittstellen aufweisen. Die Schnittstellen umfassen vorzugsweise mindestens eine Feldbus-Schnittstelle, insbesondere eine KNX-Feldbus-Schnittstelle. Andere Schnittstellen sind eine SIP-(Session Initiation Protocol) Schnittstelle sowie eine Webservice-Schnittstelle. Darüber hinaus kann der Access-Server 6 über eine Telefonanlagen-Schnittstelle und eine SNMP-Schnittstelle verfügen.

Das erfindungsgemäße Hauskommunikationsnetzwerk 1 weist vorzugsweise einen zentralen Access-Server 6, wie in Fig. 1 dargestellt, auf. Alternativ können auch mehrere dezentrale Server bzw. Access-Server vorgesehen sein, die einen Serververbund bilden. Bei einer möglichen Ausführungsform verfügt der Access-Server 6 über einen Skriptprogrammspeicher. Ein Anwendungsprogrammskript wird durch die Skripting-Engine des Access-Servers 6 aus dem Skriptprogrammspeicher geladen und die in dem geladenen Anwendungsprogrammskript enthaltenen Anwendungsprogrammanweisungen werden vorzugsweise durch einen Interpreter interpretiert. Der Interpreter kann entweder den Quellcode des Anwendungsprogrammskripts direkt ausführen oder den Quellcode des Anwendungsprogrammskripts in einen Zwischencode übersetzen und anschließend diesen Zwischencode ausführen. Ferner ist es möglich, dass die Interpreter einen vorkompilierten Code des geladenen Anwendungsprogrammskripts ausführt.

Die verschiedenen Teilnehmer 4, 8 können jeweils eine oder mehrere Gerätefunktionen bereitstellen. Diese Gerätefunktionen können sowohl Sensorfunktion als auch Aktorfunktionen umfassen. Der Datastore-Dienst des Access-Servers 6 stellt als Laufzeitdaten Statuspunkte SP bereit, die jeweils einen Zustand einer Gerätefunktion eines Teilnehmers 4, 8 angeben. Jedem Statuspunkt SP kann dabei ein konfigurierbarer Datentyp fest zugeordnet sein, welcher durch den Datenbankdienst des Server-Kernels des Access-Servers 6 bereitgestellt wird. Eine Wertänderung eines Statuspunktes SP bildet dabei vorzugweise ein Auslöseereignis, durch welches die Skripting-Engine des Access-Servers 6 dazu aktiviert wird, anhand der durch den Datenbankdienst des Server-Kernels bereitgestellten Konfigurationsdaten ein zu dem jeweiligen Statuspunkt SP zugehöriges Anwendungsprogrammskript aus dem Skriptprogrammspeicher des Access-Servers 6 zu laden. Durch das geladene Anwendungsprogrammskript wird in Abhängigkeit von dem durch die Wertänderung eines Statuspunktes SP hervorgerufenen Auslöseereignis der Wert mindestens eines anderen Statuspunktes SP' einer Gerätefunktion eines Teilnehmers 4, 8 als Folgeereignis geändert werden. Bei Eintreten eines Folgeereignis durch das geladene Anwendungsprogrammskript wird durch den Access-Server 6 mindestens eine zugehörige Gerätefunktion eines anderen Teilnehmers angesteuert, in dem verarbeitete Daten als Steuerdaten in einem Datenpaket verpackt zu dem jeweiligen Teilnehmer 4, 8 übertragen werden.

Die durch ein Anwendungsprogrammskript hervorgerufene Wertänderung eines Statuspunktes SP infolge eines Auslöseereignisses oder in Folge eines Folgeereignisses wird bei einer möglichen Ausführungsform anhand der durch den Datenbankdienst des Access-Servers 6 bereitgestellten Konfigurationsdaten an andere Anwendungsprogrammskripte in einer Nachricht durch den Access-Server 6 gemeldet, die eine derartige Meldung entsprechend den Konfigurationsdaten des Access-Servers 6 abonniert haben. Bei einer möglichen Ausführungsform ist der Server 6 über eine Schnittstelle mit einem Anzeigegerät eines Nutzers verbunden, das dem Nutzer die Wertänderung eines Statuspunktes SP anzeigt.

Bei dem in Fig. 1 dargestellten Ausführungsbeispiel werden als aktive Netzwerkkomponenten Switches 3-i eingesetzt. In großen Hauskommunikationsnetzwerken 1 können zusätzlich Router eingesetzt werden. Das in Fig. 1 dargestellte Hauskommunikationsnetzwerk 1 kann in eine bestehende Netzwerkinfrastruktur bzw. IP-Netzwerkinfrastruktur integriert werden. Dabei kommuniziert das erfindungsgemäße Hauskommunikationsnetzwerk 1 vorzugsweise von einem bestehenden Netzwerk durch VLAN. Die in Fig. 1 dargestellten Switches 3 können standardmäßig mit 10/100 MBit/Sekunde Ethernetports ausgestattet sein. Die Anzahl der Ports pro Switch 3-i kann variieren. Beispielsweise enthalten die Ports 3-i 8 - 12 Ports für 8 - 12 verschiedene Teilnehmer 4-i. Bei größeren Hauskommunikationsnetzwerken 1 können die Switches 3 jeweils 24 - 48 Ports enthalten. In Hauskommunikationsnetzwerken 1, in denen mehr als ein Switch vorgesehen ist, kann eine strukturierte sternförmige Verkabelung unter Berücksichtung des voraussichtlich zu erwartenden Lastaufkommens im Hauskommunikationsnetzwerk 1 zum Einsatz kommen. Insbesondere die Core-Switches, d. h. die Hauptverteiler, sind entsprechend ausgelegt und in der Regel mit mindestens 1000Mbit/sec angebunden. Für die Versorgung der jeweils angeschlossenen Teilnehmer bzw. Endgeräte 4, 8 werden die Switches 3-i vorzugsweise mit Power over Ethernet-Technologie ausgerüstet. Derartige Switches sind in der Lage, Teilnehmer 4, 8 mit bis zu 15, 4 Watt pro Port zu versorgen. Alternativ sind Netzteile zur Versorgung von PoE-Endgeräten vorgesehen. Die Konfiguration der Switches 3-i erfolgt vorzugsweise über ein Command Line Interface. Ferner bieten die Switches 3 vorzugsweise eine Unterstützung von VLANs portbasiert und dynamisch MAC-Adress-basiert. Weiterhin bieten die Switches 3 vorzugsweise eine Unterstützung von IGMP Multicast Snoopings RFC 2236. Weiterhin erfolgt vorzugsweise ein einheitliches Management der Switches 3-i per SNMP. IGMP Snooping verhindert die Verteilung von Multicast Traffic aller aktiven Ports eines Switches 3-i (Broadcast).

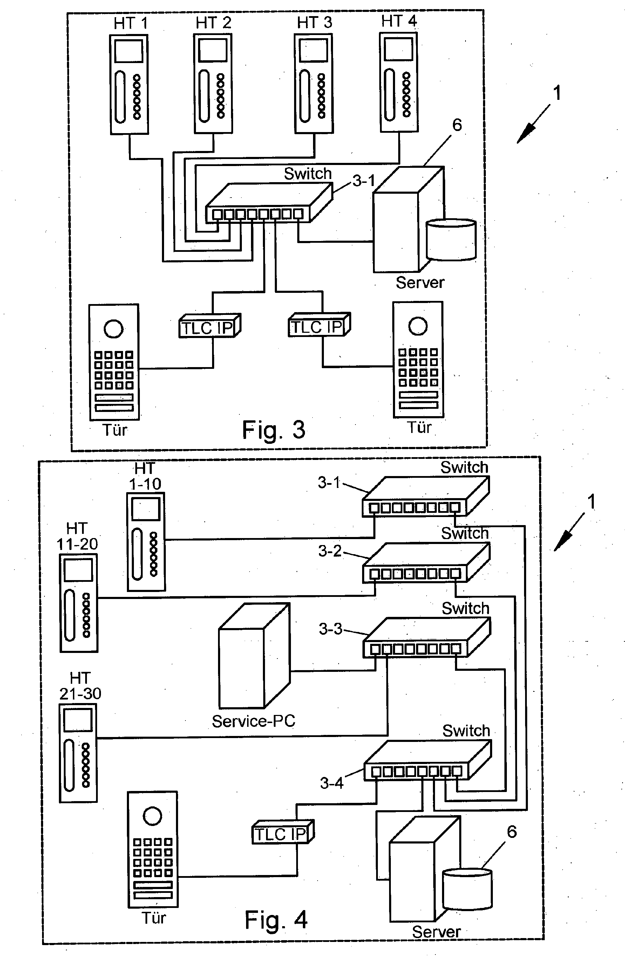

Die Fig. 3 bis 8 zeigen verschiedene Netzszenarien für das erfindungsgemäße Hauskommunikations- oder Haüsautomationssystem 1. Das System ist in der Lage, in ein Gebäude verschiedene Kommunikations- und Datendienste auf einer IP-basierten Netzwerkinfrastruktur abzubilden. Dabei ist das System offen und flexibel im Hinblick auf die unterschiedlichen Gebäudestrukturen.

Fig. 3 zeigt ein Netzszenario, bei der eine Tür- und Hauskommunikationsanlage 1 als Insellösung betrieben wird. Die Insellösung beinhaltet in der kleinsten Ausbaustufe mindestens zwei Systemteilnehmer, zusätzlich zu einen Access-Server 6 und einen Switch 3-1. In Fig. 3 wird eine Anlage als Insellösung mit zwei Türen, vier Sprechstellen, einem Switch 3-1 und einem Access-Server 6 vorgestellt. Die dargestellte Verkabelung stellt nur eine grobe Skizze dar und ist nicht repräsentativ für eine strukturierte Verkabelung bei einem Nutzer bzw. Teilnehmer. Die Systemteilnehmer sind grundsätzlich wahlfrei anwählbar. Der Access-Server 6 steuert den Verbindungsaufbau und den Verbindungsabbruch sowie das Verteilen der Audio- und Videodaten. Für Wartungs- und Konfigurationsarbeiten besteht zudem die Möglichkeit, sich über das IP-Netzwerk mittels eines PCs in das System 1 einzuwählen.

In Fig. 4 ist ein weiteres Netzszenario dargestellt, bei dem es sich um ein etwas größeres System mit einer Tür und mehreren Sprechstellen handelt. Diese sind über mehrere Etagen in einem Gebäude verteilt. Der Unterschied zu dem in Fig. 3 dargestellten Beispiel liegt in der höheren Anzahl der Teilnehmer und der etwas größeren benötigten Netzwerkinfrastruktur. Für die Anzahl der Endgeräte werden bei dem dargestellten Netzwerk mehrere Switches 3-1, 3-2, 3-3, 3-4 benötigt, die untereinander vernetzt sind. Für einen Hausmeister bzw. Systemverwalter ist in dem dargestellten Netzszenario zusätzlich ein Service-PC mit einem permanenten Netzwerkzugang fest installiert.

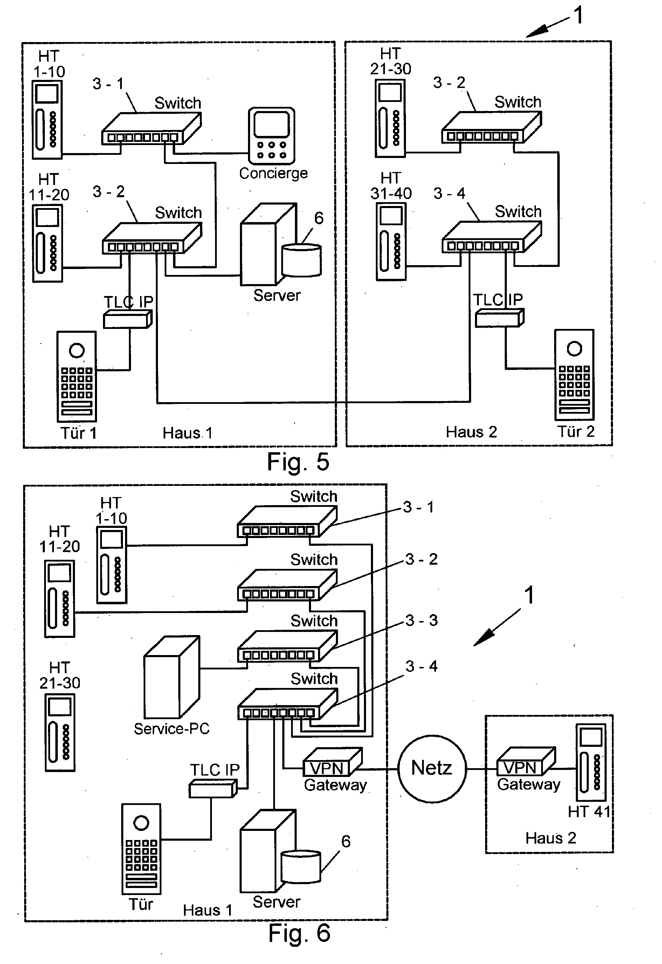

Fig. 5 zeigt ein weiteres Netzwerkszenario, bei dem ein Access-Server 6 zur skriptgesteuerten Datenverarbeitung von Daten eingesetzt ist. In dem dargestellten Beispiel sind die Endgeräte auf zwei Gebäude verteilt. Das in dem ersten Gebäude befindliche Concierge- bzw. das Anzeigegerät ist für das gesamte System 1 zuständig. Im einfachsten Fall kann die Verbindung zwischen den Gebäuden in dem dargestellten Netzszenario mittels einer Ethernet-Direktverbindung aufgebaut werden. Die Übertragungswege sind beispielsweise Fast- bzw. Gigabit-Ethernet über eine Glasfaserverbindung oder über eine kupferbasierte Verkabelung. Ein möglicher Anwendungsfall ist beispielsweise die Anbindung eines zweiten Nebengebäudes mit einigen wenigen Teilnehmern an das Access- bzw. Hauskommunikations- oder Hausautomationssystem 1, wobei das Vorsehen eines zweiten Servers in diesem Falle zu aufwändig ist.

Fig. 6 zeigt ein weiteres Anwendungsbeispiel für ein Hauskommunikations- und Hausautomationssystem 1, welches einen Access-Server 1 zur skriptgesteuerten Datenverarbeitung von Daten verwendet. Das dargestellte Netzwerkszenario zeigt die Anbindung eines entfernten Teilnehmers bzw. Nutzers an das System 1 unter Verwendung eines Gateways. Aus Sicht des Hauskommunikations- oder Hausautomationssystems 1 gibt es keinen Unterschied zwischen dem entfernten und dem lokalen Teilnehmer bzw. Gerät. Der entfernte Teilnehmer wird bei dem dargestellten Beispiel über einen VPN-Tunnel mit dem Kommunikations- oder Hausautomationssystem 1 verbunden. Ein Anwendungsfall wäre beispielsweise ein Apotheker, welcher außerhalb der Geschäftszeiten der Apotheke nur privat in einem Haus zu erreichen ist und auf diese Weise auf Notfälle reagieren kann.

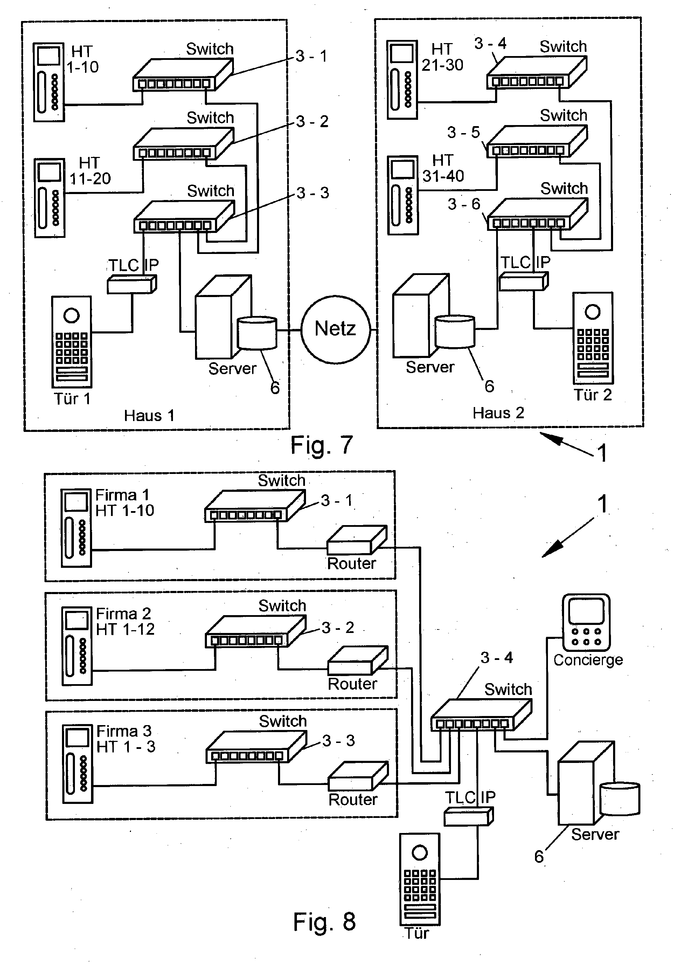

Fig. 7 zeigt ein weiteres Netzwerkszenario für ein Hauskommunikations- oder Hausautomationssystem 1, welches einen Access-Server 6 zur skriptgesteuerten Datenverarbeitung verwendet. In dem in Fig. 7 dargestellten Anwendungsszenario sind zwei eigenständige Netzwerke miteinander gekoppelt und synchronisiert. Jedes der beiden Teilnetzwerke verfügt über einen eigenen Server 6. Dabei funktionieren die Verbindungen innerhalb des ersten Hauses völlig unabhängig von den Verbindungen innerhalb des zweiten Hauses. Über die netzübergreifenden Verbindungen leiten die beteiligten Server 6 eine Nachricht bzw. einen Ruf in das gewünschte Zielnetz. Die beiden benachbarten Netze werden bei dem dargestellten Beispiel über einen VPN-Tunnel mittels eines Gateways oder direkt verbunden. Die Server 6 können bei einer möglichen Ausführungsform über eine zweite Netzwerkkarte miteinander synchronisiert werden. Ein Anwendungsfall für das in Fig. 7 dargestellte Netzszenario wäre beispielsweise eine große Wohnanlage mit mehreren Häusern. Dabei finden in allen Häusern die internen Verbindungen innerhalb des eigenen Netzes statt. Pförtner haben beispielsweise die Möglichkeit, übergreifend über alle Server 6 hinweg alle Teilnehmer zu rufen und umgekehrt können alle Teilnehmer den Pförtner anrufen.

Fig. 8 zeigt ein weiteres Netzszenario für ein Hauskommunikations- oder Hausautomationssystem 1 gemäß der Erfindung. Fig. 8 zeigt exemplarisch die Situation in einem Gebäude mit mehreren für sich eigenständigen Netzen, wobei diese eigenständigen Netze beispielsweise von verschiedenen Firmen benutzt werden. Diese Netze beeinflussen sich dabei nicht gegenseitig. Daher werden in diesem Anwendungsfall Gateways bzw. Routers verwendet, um die jeweiligen Netze von dem zentralen Zugangsnetz zu trennen. Innerhalb der lokalen Netze kann die Konfiguration unabhängig von den anderen Netzen erfolgen.

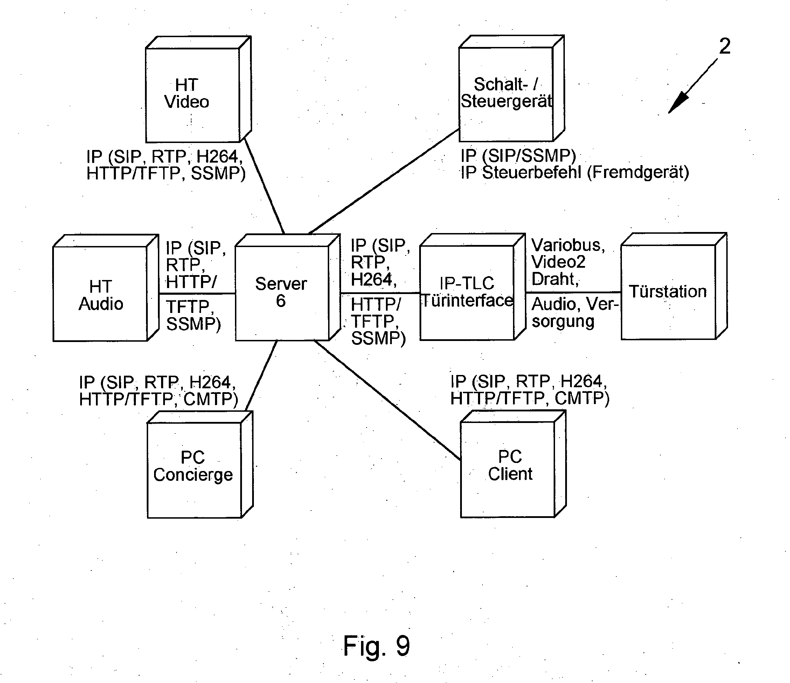

Fig. 9 zeigt schematisch die Zusammensetzung des erfindungsgemäßen Hauskommunikations- oder Hausautomationssystems mit einem Access-Server auf Protokollebene. Wie man aus Fig. 9 erkennen kann, verwendet das erfindungsgemäße System ICP/IP-Protokolle mit entsprechenden Erweiterungen. Weiterhin können Standardprotokolle, wie RTP, RTCP, SNMP, FTP/TFTP, HTTP, HTTPS verwendet werden. Ein proprietäres Protokoll, wie beispielsweise SSMP (Siedle SIP Message Protocol), kann zudem für die Signalisierung/Steuerung zu Endgeräten vorgesehen sein. Als weiteres Protokoll kann ferner ein Protokoll für die Signalisierung bzw. Steuerung zu einem Anzeigegerät bzw. PC verwendet werden.

Die Signalisierung erfolgt vorzugsweise auf Basis der SIP-Standardfamilie. Dabei erfolgt die Signalisierung grundsätzlich immer über den Access-Server 6, welcher einen SIP-Protokolltreiber enthält. Auch die Audio- und Videodaten werden vorzugsweise stets über den Access-Server 6 geleitet. Der SIP-Serverdienst zur Steuerung vermittelt Rufe von entsprechenden Teilnehmern weiter und steuert die Verteilung der Audio-und Videodaten. Dabei ist es möglich, die Audio- und Videodaten an unterschiedliche Geräte bzw. Endgeräte zu senden, wobei die Verwaltung der IP-Adressen für RTP innerhalb von SIP ausgelegt ist. Für den Teilnehmer bzw. ein Gerät 4 kann ein individuelles Keep Alive, d. h. ein bestimmter abgegrenzter Zeitraum, in dem der Teilnehmer 4 sich bei dem Access-Server 6 zurückmelden muss, konfiguriert werden. Dies kann bei einer möglichen Variante mit Hilfe eines UDP-Sockets realisiert werden, bei dem ein Teilnehmer 4 bzw. ein Gerät seine Anwesenheit zyklisch bestätigen kann. Weiterhin kann ein regelmäßig zu wiederholendes SIP-Register oder ein Nat-Refresh eingesetzt werden.

In dem Hauskommunikations- bzw. Hausautomationssystem 1 kommen für die Kommunikation zwischen den Teilnehmern bzw. Geräten 4 und der Systemverwaltung je nach Anwendungsfall verschiedene Protokolle zum Einsatz. Hierbei können neben den Standardkommunikationsprotokollen, wie SIP, STP, RTP, HTTP usw., für den Datenaustausch zur Steuerung der Endgeräte mit dem Server 6 auch proprietäre Protokolle zum Einsatz kommen, beispielsweise das SSMP-Protokoll (Siedle SIP Message Protocol). Rufe bzw. Nachrichten können verschiedene Prioritätsstufen aufweisen. Rufe gleichen Typs genießen generell eine Prioritätsstufe. Weiterhin können in dem Server 6 an verschiedenen Stellen Time Outs realisiert werden, um eingefrorene Abläufe und unnötig besetzte Sprechwege wieder freizugeben. Weiterhin können hiermit ausgefallene Teilnehmer 4 erkannt werden. In dem erfindungsgemäßen Hauskommunikations- und Hausautomationssystem 1 kennt der Access-Server 6 die logische Verbindung der Teilnehmer 4. Auf diese Weise ist gewährleistet, dass alle Geräte bzw. Endgeräte in dem System miteinander arbeiten und kommunizieren können, solange der Access-Server 6 in der Lage ist, sie anzusprechen, selbst über Netzgrenzen hinaus, sei es SIP-Endgeräte mit KNX-Steuergerät oder ISDN-Telefonleitungen.

Bei einer möglichen Ausführungsform des erfindungsgemäßen Hauskommunikations- oder Hausautomationssystems 1 erfolgt der Datenverkehr in abgesicherter Form, d. h. verschlüsselt. Alle Endgeräte erhalten dabei von dem Access-Server 6 einen geheimen Schlüssel, einen sogenannten Private Key. Dieser kryptographische Schlüssel kann für alle Endgeräte identisch sein. In diesem Falle muss der Server 6 für alle Geräte des Systems 1 nur einen Gegenschlüssel, den sogenannten Public Key, vorhalten. Der Private Key der Endgeräte kann bei der Anmeldung beim Server 6 übertragen werden und ist ebenfalls gesichert durch ein bekanntes "Shared Secret", das nur an dieser Stelle verwendet wird. Vorzugsweise wird mit dem kryptographischen Schlüssel des Endgerätes, d. h. dem Private Key, jedes Datenpaket der Endgeräte in Kombination mit einem Zeitstempel signiert. Ferner kann die Systemzeit durch den Server 6 in bestimmten Zeitintervallen synchronisiert werden. Datenpakete können eine bestimmte Gültigkeit haben, beispielsweise für die Dauer von 120 Sekunden. Auf diese Weise werden effektiv sogenannte Replay Attacken verhindert.

Die Erfindung schafft ein IP-basiertes Kommunikations- oder Hausautomationssystem 1, das um Systemfunktionalitäten in einfacher Weise erweiterbar ist. Das auf IP-Basis angelegte, ganzheitliche Hauskommunikations- bzw. Hausautomationssystem 1 2 ist in der Lage, verschiedene Bereiche der Kommunikation, Sicherheit, Heimautomation bzw. Gebäudeautomation miteinander zu integrieren. Das erfindungsgemäße System 1 ist voll skalierbar und kann eine Vielzahl von Teilnehmern bzw. Endgeräten umfassen. Es weist zudem eine hohe System- und Ausfallsicherheit auf. Es erlaubt eine zentrale Steuerung und Koordination durch den Access-Server 6. Ferner erlaubt das erfindungsgemäße System 1, Alarm- und Notrufmanagement ohne Weiteres zu integrieren. Es bietet zudem typische auf Telefonanlagen basierende Funktionen sowie Steuer- und Automationsfunktionen. Das erfindungsgemäße System 1 ermöglicht mehrere simultane Sprech- und Videoverbindungen. Dabei kann die Einbindung von Fremdprodukten bzw. Fremdgeräten ohne Weiteres erfolgen. Das erfindungsgemäße System 1 bietet zudem einen hohen Komfort für Konfigurationsund Updatefunktionen. Gewünschte Sonderlösungen sind in einfacher Weise implementierbar. Die Energieversorgung der Teilnehmer bzw. Geräte 4 kann beispielsweise durch POE (Power Over Ethernet) erfolgen. Die in dem erfindungsgemäßen Kommunikations- oder Hausautomationssystem 1 eingesetzten Geräte bzw. Netzwerkkomponenten umfassen sowohl passive als auch aktive Netzwerkkomponenten. Die aktiven Netzwerkkomponenten umfassen beispielsweise Audio-HT-Geräte und Video-HT-Geräte. Des Weiteren umfassen die aktiven Netzwerkkomponenten bzw. Geräte ansteuerbare Türen. Weitere Beispiele für verwendete aktive Netzwerkkomponenten sind Switches 3 oder Router, die es erlauben, das erfindungsgemäße Hauskommunikations- oder Hausautomationssystem 1 in eine bestehende IP-Netzinfrastruktur zu integrieren. Dabei wird vorzugsweise das erfindungsgemäße Hauskommunikations- oder Hausautomationssystem 1 von einem bestehenden Netz durch VLAN getrennt. Die Switches 3 können beispielsweise mit 10/100 MBit Ethernetports ausgestattet sein. Switches 3 für kleinere Netzwerke weisen beispielsweise 8 - 12 Ports auf, wobei Switches 3 für größere Netzwerke auch 24 - 48 Ports besitzen können. Bei der,Stromversorgung der jeweils angeschlossenen Endgeräte können die Switches 3 mit POE (Power Over Ethernet) ausgerüstet sein. Weitere Beispiele für verwendete aktive Komponenten bzw. Geräte sind sogenannte Medi-a-Adapter. Ein Adapter kann beispielsweise für die Übertragung über Glasfaser und für die Übertragung über ein Stromversorgungsnetz (Power Line) vorgesehen sein.

Als weitere aktive Netzwerkkomponenten bzw. Geräte sind Gateways bzw. Router vorgesehen. Gateways werden vorgesehen, wenn Netze zusammengeschaltet werden sollen, eine direkte Verbindung jedoch nicht möglich ist. Dies kann beispielsweise aus Sicherheitsgründen in unterschiedlichen Protokollen oder bei inkompatiblen physikalischen Schnittstellen notwendig sein. Teilnehmer bzw. Geräte können direkt oder mit einem Gateway über das Internet mit dem System verbunden werden. Die in dem erfindungsgemäßen Hauskommunikations- und Hausautomationssystem 1 verwendeten unterschiedlichen Geräte sind vorzugsweise über eine Adresse ansprechbar. Diese Geräte umfassen beispielsweise Videokameras, Bewegungsmelder, elektronische Schlüsselleser, Fingerabdruckerkennungseinrichtungen, Rufanzeigen, Lichtmodule, Schlüsselschalter, Hausnummeranzeigen, Tastenfelder, Kartenleser und Türlautsprecher. Weiterhin kann es sich bei den Endgeräten um Telefongeräte handeln, die fest installiert sind oder auch tragbar sind. Weitere Beispiele sind Videogeräte für Türen, Garagen oder Jalousien bzw. Rollläden.

## Patentansprüche

1. Hauskommunikationsnetzwerk (1) mit mehreren Netzwerksegmenten (2), die über Switches (3) miteinander gekoppelt sind,
wobei Teilnehmer (4) des Hauskommunikationsnetzwerks (1) jeweils über eine Anschlussleitung an ein Port eines Switches (3) angeschlossen sind und durch die Switches (3) zur Kommunikation paarweise miteinander verbunden werden,
wobei an mindestens einem Switch (3)ein Access-Server (6) des Hauskommunikationsnetzwerks (1) zur skriptgesteuerten Datenverarbeitung von Daten angeschlossen ist,
**dadurch gekennzeichnet, dass** der Access-Server (6):
- mindestens eine Schnittstelle zum Empfang von Datenpaketen, welche von einem Teilnehmer (4) über ein Datennetzwerk gemäß einem ersten Datenübertragungsprotokoll übertragen werden, wobei für jede Schnittstelle ein zugehöriger Protokolltreiber vorgesehen ist, welche die in den empfangenen Datenpaketen enthaltenen Daten in ein internes Datenformat des Access-Servers (6) umwandelt, und
- eine Skripting-Engine, die ein gespeichertes Anwendungsprogrammskript lädt, welches die in dem internen Datenformat vorliegenden empfangenen Daten gemäß den in dem geladenen Anwendungsprogrammskript enthaltenen Anwendungsprogrammanweisungen anhand von Statuspunkten, die jeweils einen Zustand einer Gerätefunktion eines Teilnehmers (4) angeben, verarbeitet,
aufweist.
und dass die verarbeiteten Daten durch einen Protokolltreiber des Access-Servers (6) in Datenpakete verpackt und gemäß einem zweiten Datenübertragungsprotokoll über eine Schnittstelle des Access-Servers (6) zu einem zweiten Teilnehmer (4) des Hauskommunikationsnetzwerks (1) übertragen werden.

2. Hauskommunikationsnetzwerk nach Anspruch 1,
wobei die Teilnehmer (4) des Hauskommunikationsnetzwerks (1) über den Access-Server (6) des Hauskommunikationsnetzwerks (1) durch Austausch von Datenpaketen miteinander kommunizieren.

3. Hauskommunikationsnetzwerk nach einem der vorangehenden Ansprüche 1 oder 2,
wobei die Switches (3) PoE-(Power over Ethernet)Switches aufweisen.

4. Hauskommunikationsnetzwerk nach einem der vorangehenden Ansprüche 1 - 3,
wobei die Switches (3) Multicast-Switches aufweisen.

5. Hauskommunikationsnetzwerk nach einem der vorangehenden Ansprüche 1 - 4,
wobei die Switches (3) über ein Command Line Interface konfigurierbar sind.

6. Hauskömmunikationsnetzwerk nach einem der vorangehenden Ansprüche 1 - 5,
wobei eine Konfiguration der Teilnehmer (4) und der Switches (3) in dem Access-Server (6) des Hauskommunikationsnetzwerks (1) gespeichert ist.

7. Hauskommunikationsnetzwerk nach einem der vorangehenden Ansprüche 1 - 6,
wobei die Teilnehmer (4) adressierbare Hausendgeräte sind, welche Haustelefonendgeräte, Türsteuereinrichtungen, Videokameras, Videogeräte, Türsprecheinrichtungen, Tastenfelder, Rollladensteuereinrichtungen, Hausschalteinrichtungen, Schalter, Hausbeleuchtungseinrichtungen, Bewegungsmeldeeinrichtungen, Schlüsselleseeinrichtungen, Kartenleseeinrichtungen, Fingerabdruckerkennungseinrichtungen und Hauscomputereinrichtungen aufweisen.

8. Hauskommunikationsnetzwerk nach einem der vorangehenden Ansprüche 1 - 7,
wobei die Teilnehmer (4) jeweils über eine MAC-Adresse oder eine IP-Adresse adressierbar sind.

9. Hauskommunikationsnetzwerk nach einem der vorangehenden Ansprüche 1 - 8,
wobei ein entfernter Teilnehmer (8) direkt über ein Switch (3) oder über ein Gateway, welches an ein Port eines Switches (3) angeschlossen ist, über das Internet mit dem Hauskommunikationsnetzwerk (1) verbunden ist.

10. Hauskommunikationsnetzwerk nach Anspruch 1,
wobei die Schnittstellen des Access-Servers (6) eine oder mehrere der folgenden Schnittstellen aufweisen:
- eine Feldbus-Schnittstelle, insbesondere eine KNX-Schnittstelle,
- eine SIP-(Session Initiation Protocol)Schnittstelle,
- eine Webservice-Schnittstelle,
- eine Telefonanlagen-Schnittstelle,
- eine SNMP-Schnittstelle

11. Verfahren zur Kommunikation von Teilnehmern eines Hauskommunikationsnetzwerks (1) mit mehreren Netzwerksegmenten (2), die über Switches (3) miteinander gekoppelt sind,
wobei Teilnehmer (4) des Hauskommunikationsnetzwerks (1) jeweils über eine Anschlussleitung an ein Port eines Switches (3) angeschlossen sind und durch die Switches (3) zur Kommunikation paarweise miteinander verbunden werden,
wobei mindestens ein Access-Server (6) zur skriptgesteuerten Datenverarbeitung von Daten vorgesehen ist, über den die Signalisierung zwischen den Teilnehmern (4) erfolgt,
**dadurch gekennzeichnet, dass** der Access-Server (6):
- mindestens eine Schnittstelle zum Empfang von Datenpaketen, welche von einem Teilnehmer (4) über ein Datennetzwerk gemäß einem ersten Datenübertragungsprotokoll übertragen werden, wobei für jede Schnittstelle ein zugehöriger Protokolltreiber vorgesehen ist, welche die in den empfangenen Datenpaketen enthaltenen Daten in ein internes Datenformat des Access-Servers (6) umwandelt, und
- eine Skripting-Engine, die ein gespeichertes Anwendungsprogrammskript lädt, welches die in dem internen Datenformat vorliegenden empfangenen Daten gemäß den in dem geladenen Anwendungsprogrammskript enthaltenen Anwendungsprogrammanweisungen anhand von Statuspunkten, die jeweils einen Zustand einer Gerätefunktion eines Teilnehmers (4) angeben, verarbeitet,
aufweist
und dass die verarbeiteten Daten durch einen Protokolltreiber des Access-Servers (6) in Datenpakete verpackt und gemäß einem zweiten Datenübertragungsprotokoll über eine Schnittstelle des Access-Servers (6) zu einem zweiten Teilnehmer (4) des Hauskommunikationsnetzwerks (1) übertragen werden.

12. Verfahren nach Anspruch 11,
wobei die Signalisierung über den Access-Server (6) gemäß einem SIP (Session Initiation Protocol) erfolgt.

## Claims

1. Household communication network (1) comprising a plurality of network segments (2) which are coupled to one another via switches (3),
subscribers (4) of the household communication network (1) each being connected to a port of a switch (3) via a connection line and being interconnected pairwise by the switches (3) for communication,
an access server (6) of the household communication network (1) for script-controlled data processing of data being connected to at least one switch (3),
**characterised in that** the access server (6) comprises:
- at least one interface for receiving data packets which are transmitted by a subscriber (4) via a data network in accordance with a first data transmission protocol, an associated protocol driver being provided for each interface and converting the data contained in the received data packets into an internal data format of the access server (6), and
- a scripting engine, which loads a stored application program script, which processes the received data in the internal data format in accordance with the application program instructions contained in the loaded application program script by way of status points, which each specify a state of a device function of a subscriber (4),
and in that the processed data are packed into data packets by a protocol driver of the access server (6) and transmitted via an interface of the access server (6) to a second subscriber (4) of the household communication network (1) in accordance with a second data transfer protocol.

2. Household communication network according to claim 1, wherein the subscribers (4) of the household communication network (1) communicate with one another via the access server (6) of the household communication network (1) by exchanging data packets.

3. Household communication network according to either of the preceding claims 1 or 2, wherein the switches (4) comprise PoE (power-over-Ethernet) switches.

4. Household communication network according to any of the preceding claims 1 - 3, wherein the switches (3) comprise multicast switches.

5. Household communication network according to any of the preceding claims 1 - 4, wherein the switches (3) are configurable via a command line interface.

6. Household communication network according to any of the preceding claims 1 - 5, wherein a configuration of the subscribers (4) and the switches (3) is stored in the access server (6) of the household communication network (1).

7. Household communication network according to any of the preceding claims 1 - 6, wherein the subscribers (4) are addressable household terminals, which comprise household telephone terminals, door control devices, video cameras, video devices, door intercom devices, keypads, roller blind control devices, household switch devices, switches, household lighting devices, movement detector devices, key reader devices, card reader devices, fingerprint recognition devices and household computer devices.

8. Household communication network according to any of the preceding claims 1 - 7, wherein the subscribers (4) are each addressable via a MAC address or an IP address.

9. Household communication network according to any of the preceding claims 1 - 8, wherein a remote subscriber (8) is connected to the household communication network (1) via the Internet, directly via a switch (3) or via a gateway which is connected to a port of a switch (3).

10. Household communication network according to claim 1, wherein the interfaces of the access server (6) comprise one or more of the following interfaces:
- a fieldbus interface, in particular a KNX interface,
- an SIP (session initiation protocol) interface
- a Web service interface
- a telephone system interface
- an SNMP interface.

11. Method for communication by subscribers of a household communication network (1) comprising a plurality of network switches (2) which are coupled to one another via switches,
subscribers (4) of the household communication network (1) each being connected to a port of a switch (3) via a connection line and being interconnected pairwise by the switches (3) for communication,
an access server (6), via which the signalling between the subscribers (4) takes place, for script-controlled data processing of data being provided,
**characterised in that** the access server (6) comprises:
- at least one interface for receiving data packets which are transmitted by a subscriber via a data network in accordance with a first data transmission protocol, an associated protocol driver being provided for each interface and converting the data contained in the received data packets into an internal data format of the access server (6), and
- a scripting engine which loads a stored application program script, which processes the received data in the internal data format in accordance with the application program instructions contained in the loaded application program script by way of status points, which each specify a state of a device function of a subscriber (4),
- and in that the processed data are packed into data packets by a protocol driver of the access server (6) and transmitted via an interface of the access server (6) to a second subscriber (4) of the household communication network (1) in accordance with a second data transfer protocol.

12. Method according to claim 11, wherein the signalling via the access server (6) takes place in accordance with an SIP (session initiation protocol).

## Revendications

1. Réseau de communication domestique (1) comportant plusieurs segments de réseau (2), qui sont interconnectés par le biais de commutateurs (3),
des abonnés (4) du réseau de communication domestique (1) étant respectivement connectés par un circuit de connexion à un port d'un commutateur (3) et mis en communication deux à deux par les commutateurs (3),
un serveur d'accès (6) du réseau de communication domestique (1) étant raccordé à au moins un commutateur (3) pour le traitement de données par commande de script, **caractérisé par le fait que** le serveur d'accès (6) présente :
- au moins une interface pour la réception de paquets de données, qui sont transmis par un abonné (4) par le biais d'un réseau de données selon un premier protocole de transmission de données, un pilote de protocole associé étant prévu pour chaque interface, qui convertit les données contenues dans les paquets de données reçus en un format de données interne du serveur d'accès (6), et
- un moteur de scripts, qui charge un script de programme d'application, qui traite les données présentes reçues au format de données interne selon les instructions du programme d'application comprises dans le script de programme d'application chargé au moyen de points d'état, qui indiquent respectivement un état de fonctionnement de l'appareil d'un abonné (4),
et par le fait que les données traitées sont mises en paquets de données par un pilote de protocole du serveur d'accès (6) et sont transmises, selon un second protocole de transmission de données, par le biais d'une interface du serveur d'accès (6) à un second abonné (4) du réseau de communication domestique (1).

2. Réseau de communication domestique selon la revendication 1, les abonnés (4) du réseau de communication domestique (1) communiquant entre eux par le biais du serveur d'accès (6) du réseau de communication domestique (1) en échangeant des paquets de données.

3. Réseau de communication domestique selon l'une des revendications précédentes 1 ou 2, les commutateurs (3) présentant des commutateurs PoE (Power over Ethernet).

4. Réseau de communication domestique selon l'une des revendications précédentes 1 à 3, les commutateurs (3) présentant des commutateurs multidiffusion.

5. Réseau de communication domestique selon l'une des revendications précédentes 1 à 4, les commutateurs (3) étant configurables par le biais d'une interface en ligne de commande (CLI).

6. Réseau de communication domestique selon l'une des revendications précédentes 1 à 5, une configuration des abonnés (4) et des commutateurs (3) étant enregistrée dans le serveur d'accès (6) du réseau de communication domestique (1).

7. Réseau de communication domestique selon l'une des revendications précédentes 1 à 6, les abonnés (4) étant des terminaux domestiques adressables, qui présentent des terminaux téléphoniques domestiques, des commandes de porte, des caméras vidéo, des appareils vidéo, des interphones, des claviers à touches, des commandes de volets roulants, des commutateurs domestiques, des interrupteurs, des dispositifs d'éclairage domestiques, des détecteurs de mouvements, des lecteurs de clés, des lecteurs de cartes, des dispositifs de reconnaissance d'empreintes digitales et des dispositifs informatiques domestiques.

8. Réseau de communication domestique selon l'une des revendications précédentes 1 à 7, les abonnés (4) pouvant être adressés respectivement par le biais d'une adresse MAC ou d'une adresse IP.

9. Réseau de communication domestique selon l'une des revendications précédentes 1 à 8, un abonné distant (8) étant relié directement par le biais d'un commutateur (3) ou d'une passerelle, qui est raccordée à un port d'un commutateur (3), par le biais d'internet au réseau de communication domestique (1).

10. Réseau de communication domestique selon la revendication 1, les interfaces du serveur d'accès (6) présentant une ou plusieurs des interfaces suivantes :
- une interface bus de terrain, en particulier une interface KNX,
- une interface SIP (Session Initiation Protocol),
- une interface de services web,
- une interface d'installation téléphonique,
- une interface SNMP.

11. Procédé de communication d'abonnés d'un réseau de communication domestique (1) comportant plusieurs segments de réseau (2), qui sont interconnectés par le biais de commutateurs (3), des abonnés (4) du réseau de communication domestique (1) étant respectivement connectés par un circuit de connexion à un port d'un commutateur (3) et mis en communication deux à deux par les commutateurs (3), au moins un serveur d'accès (6) étant prévu pour le traitement de données par commande de script de données, par le biais duquel s'effectue la signalisation entre les abonnés (4),
**caractérisé par le fait que** le serveur d'accès (6) présente :
- au moins une interface pour la réception de paquets de données, qui sont transmis par un abonné (4) par le biais d'un réseau de données selon un premier protocole de transmission de données, un pilote de protocole associé étant prévu pour chaque interface, qui convertit les données contenues dans les paquets de données reçus en un format de données interne du serveur d'accès (6), et
- un moteur de scripts, qui charge un script de programme d'application, qui traite les données présentes reçues au format de données interne selon les instructions du programme d'application comprises dans le script de programme d'application chargé au moyen de points d'état, qui indiquent respectivement un état de fonctionnement de l'appareil d'un abonné (4),
et que les données traitées sont mises en paquets de données par un pilote de protocole du serveur d'accès (6) et sont transmises, selon un second protocole de transmission de données, par le biais d'une interface du serveur d'accès (6) à un second abonné (4) du réseau de communication domestique (1).

12. Procédé selon la revendication 11, la signalisation est effectuée par le biais du serveur d'accès (6) selon un SIP (Session Initiation Protocol).
